# EUROPÄISCHE PATENTSCHRIFT

(11) **EP 1 138 549 B1**
(45) Veröffentlichungstag und Bekanntmachung des Hinweises auf die Patenterteilung: **13.06.2007**
(21) Anmeldenummer: 01105976.3
(22) Anmeldetag: 10.03.2001
(51) Int. Cl.: B60N 3/10

(54) **Halterung für einen Getränkebehälter**
Support for a beverage container
Support pour un récipient de boisson

(30) Priorität: 27.03.2000 DE 10015197
(43) Veröffentlichungstag der Anmeldung: 04.10.2001
(73) Patentinhaber: fischerwerke Artur Fischer GmbH & Co. KG, 72178 Waldachtal (DE)
(72) Erfinder: Schierling, Inge, 72290 Lossburg (DE); Schaal, Falk, 72275 Alpirsbach (DE)

(56) Entgegenhaltungen:
- WO-A-01/60657
- DE-A- 4 022 193
- US-A- 5 330 146
- US-A- 5 489 054
- US-A- 5 533 772
- US-A- 5 598 999

## Beschreibung

Die Erfindung betrifft eine Halterung für einen Getränkebehälter, wie beispielsweise eine Getränkedose, einen Becher oder eine Tasse, mit den Merkmalen des Oberbegriffs des Anspruchs 1.

Derartige Halterungen sind in einer nahezu unüberschaubaren Vielzahl an Ausführungen an sich bekannt. (siehe z.B. die US-A-5 598 999 Patentschrift) Der Erfindung liegt die Aufgabe zugrunde, eine Halterung für einen Getränkebehälter platzsparend unterbringbar auszubilden.

Diese Aufgabe wird erfindungsgemäß durch die Merkmale des Anspruchs 1 gelöst. Die erfindungsgemäße Halterung gemäß Anspruch 1 weist einen Aufnahmeraum zum Einstellen des Getränkebehälters auf. Der Aufnahmeraum kann beispielsweise eine Aussparung in einem Armaturenbrett oder einer Mittelkonsole eines Kraftwagens sein. Im Aufnahmeraum ist ein Behältnis aufgenommen, beispielsweise ein Aschenbecher, ein Ablagefach oder ein Brillenetui. Dies hat den Vorteil, dass der Aufnahmeraum zum Einstellen des Getränkebehälters bei Nichtnutzung für einen Getränkebehälter zur Unterbringung des Behältnisses nutzbar ist, der vom Aufnahmeraum eingenommene Bauraum wird dadurch doppelt genutzt. Um einen Getränkebehälter in den Aufnahmeraum einstellen zu können, weist die erfindungsgemäße Halterung eine Führung auf, an der das Behältnis aus dem Aufnahmeraum heraus bewegbar geführt ist. Ist das Behältnis aus dem Aufnahmeraum heraus bewegt, lässt sich ein Getränkebehälter in den Aufnahmeraum einstellen.

Bei einer Ausgestaltung der Erfindung ist die Führung für das Behältnis bzw. die Aufnahme als Teleskopführung ausgebildet. Das Behältnis bzw. die Aufnahme ist mit der Teleskopführung beispielsweise nach oben verschieblich geführt. Zusätzlich kann die Führung eine Schwenklagerung aufweisen, um den Aufnahmeraum bzw. das Behältnis zur Seite schwenken zu können, damit der Aufnahmeraum zum Einstellen des Getränkebehälters bzw. das Behältnis zum Einlegen oder Entnehmen eines Gegenstandes zugänglich ist.

Bei einer Ausgestaltung der Erfindung ist das Behältnis ein Aschenbecher.

Die Erfindung wird nachfolgend anhand zweier in der Zeichnung dargestellter Ausführungsbeispiele näher erläutert. Es zeigen:
- Figuren 1 - 3: ein erstes Ausführungsbeispiel der Erfindung in unterschiedlichen Stellungen; und
- Figuren 4 - 7: ein zweites Ausführungsbeispiel der Erfindung in unterschiedlichen Stellungen.

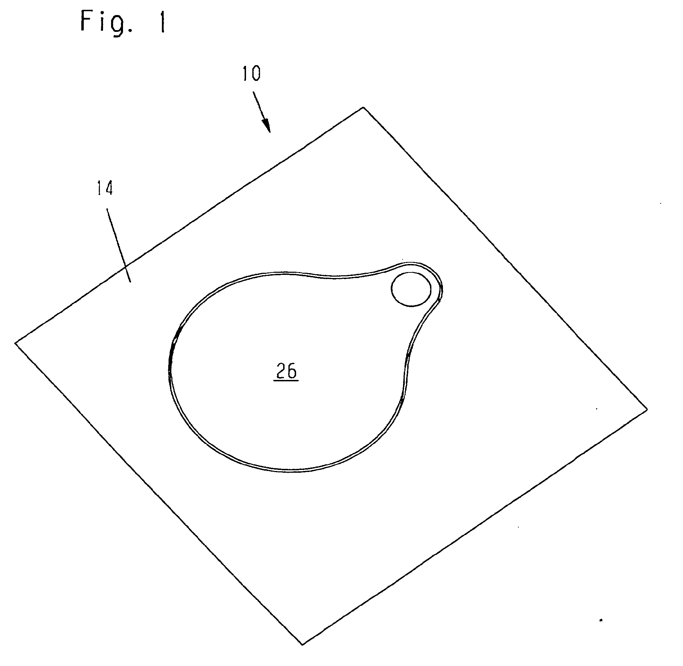

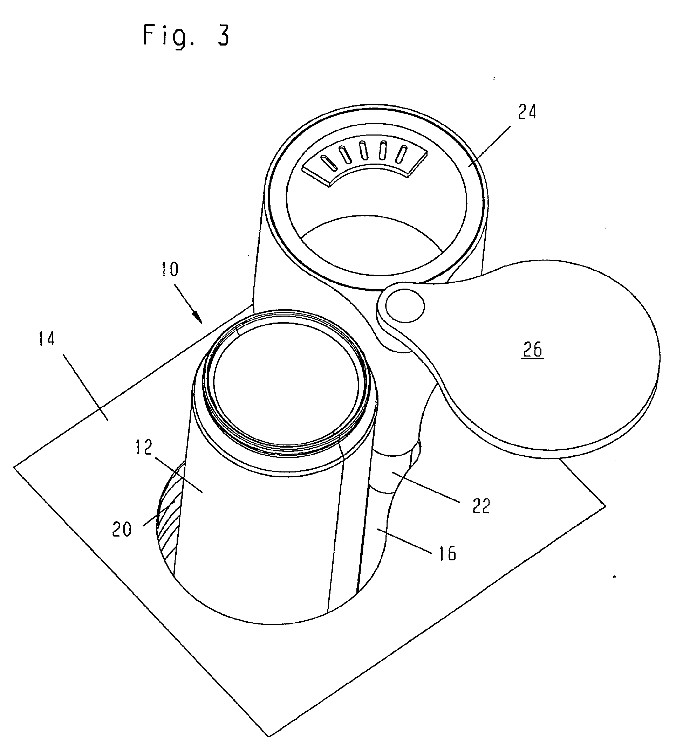

Die in Figuren 1 - 3 dargestellte, erfindungsgemäße Halterung 10 ist zum Einstellen eines Getränkebehälters wie beispielsweise einer Getränkedose 12 (Figur 3), eines Bechers oder einer Tasse vorgesehen. Die Halterung 10 ist beispielsweise in einem Armaturenbrett oder einer Mittelkonsole 14 eines Kraftwagens untergebracht, wobei das Armaturenbrett oder die Mittelkonsole 14 in der Zeichnung als quadratische Fläche dargestellt sind. Die Halterung 10 weist einen Aufnahmeraum 16 zum Einstellen des Getränkebehälters 12 auf, wobei der Aufnahmeraum 16 als im Wesentlichen zylinderförmige Vertiefung der Mittelkonsole 14 ausgebildet ist. In einer Umfangswand 18 des Aufnahmeraums 16 ist eine näherungsweise in Umfangsrichtung verlaufende Ausgleichsklappe 20 angebracht, die federbeaufschlagt ein Stück weit in den Aufnahmeraum 16 hinein verschwenkt. Die Ausgleichsklappe 20 dient der Anpassung des Aufnahmeraums 16 an Getränkebehälter unterschiedlichen Durchmessers.

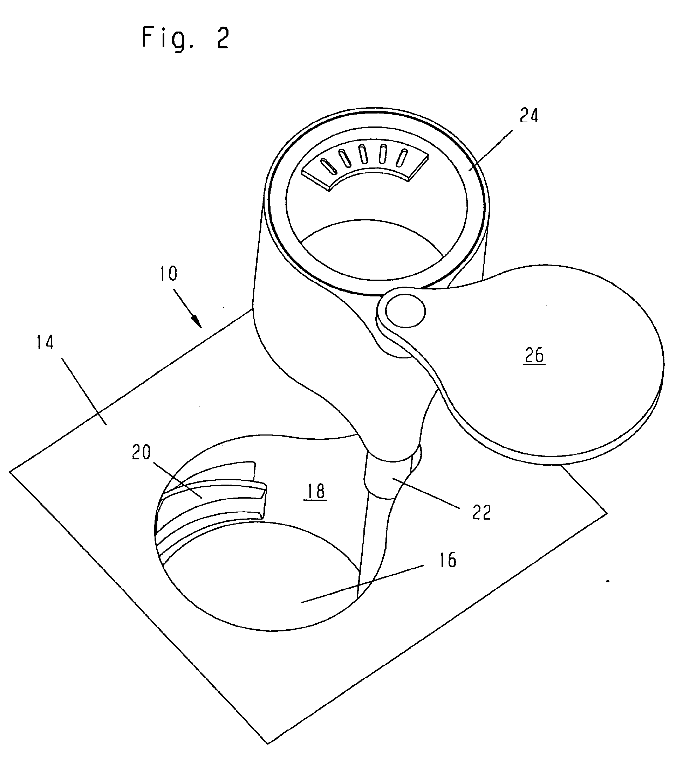

In einer seitlichen Erweiterung des Aufnahmeraums 16 weist die Halterung 10 eine Teleskopführung 22 auf, an der ein Behältnis, im dargestellten Ausführungsbeispiel ein Aschenbecher 24 angebracht ist. Mittels der Teleskopführung 22 lässt sich der Aschenbecher 24 aus einer im Aufnahmeraum 16 versenkten Stellung (Figur 1) in eine nach oben aus dem Aufnahmeraum 16 heraus bewegte Stellung verschieben (Figuren 2 und 3). Das Anheben des Aschenbechers 24 aus dem Aufnahmeraum 16 heraus erfolgt vorzugsweise federbetätigt von einer in der Teleskopführung 22 angeordneten, in der Zeichnung nicht sichtbaren Feder. In der im Aufnahmeraum 16 versenkten Stellung wird der Aschenbecher 24 durch eine Verriegelungseinrichtung, beispielsweise eine an sich bekannte Push-Push-Mechanik gehalten, die durch kurzen Druck auf den Aschenbecher 24 entriegelbar ist.

Die Teleskopführung 22 weist eine Schwenklagerung auf, mit der der Aschenbecher 24 in die in Figuren 2 und 3 dargestellte, gegenüber dem Aufnahmeraum 16 zur Seite verschwenkte Stellung schwenkbar ist. Durch das seitliche Verschwenken des aus dem Aufnahmeraum 16 nach oben heraus angehobenen Aschenbechers 24 wird der Aufnahmeraum 16 frei von oben zugänglich, so dass ein Getränkebehälter 12 wie in Figur 3 dargestellt in den Aufnahmeraum 16 einstellbar ist.

An einer Oberseite des Aschenbechers 14 ist ein Deckel 26 um eine vertikale Schwenkachse zur Seite schwenkbar angebracht. Mit dem Deckel 26 ist der Aschenbecher 24 verschließbar. In der in den Aufnahmeraum 16 abgesenkten Stellung des Aschenbechers 24 ist mit dem Deckel 26 zugleich mit dem Aschenbecher 24 auch der Aufnahmeraum 16 verschließbar. Der Deckel 26 lässt sich auch in der in den Aufnahmeraum 16 abgesenkten Stellung des Aschenbechers 24 zur Seite schwenken, so dass der Aschenbecher 24 auch in der abgesenkten Stellung nutzbar ist.

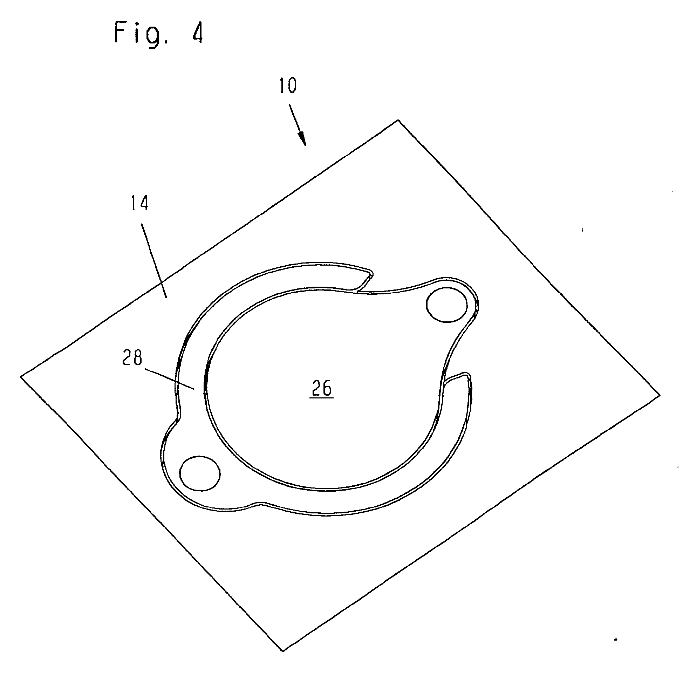

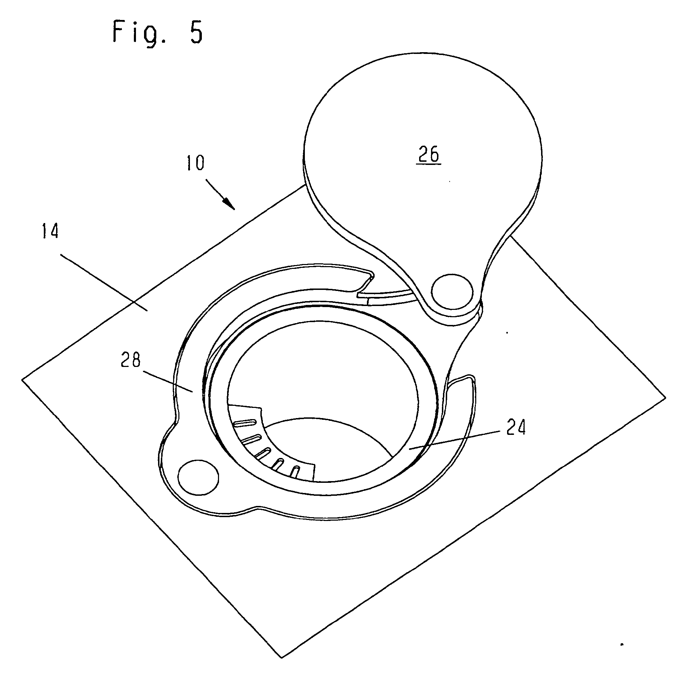

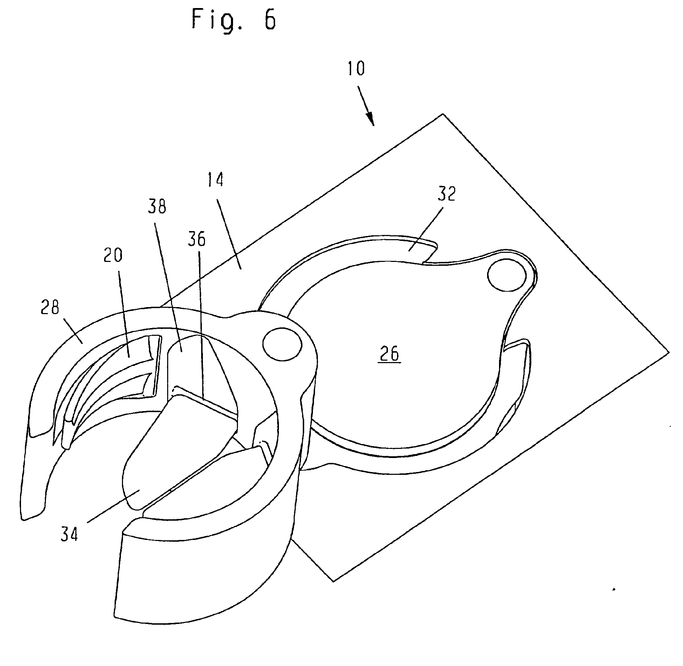

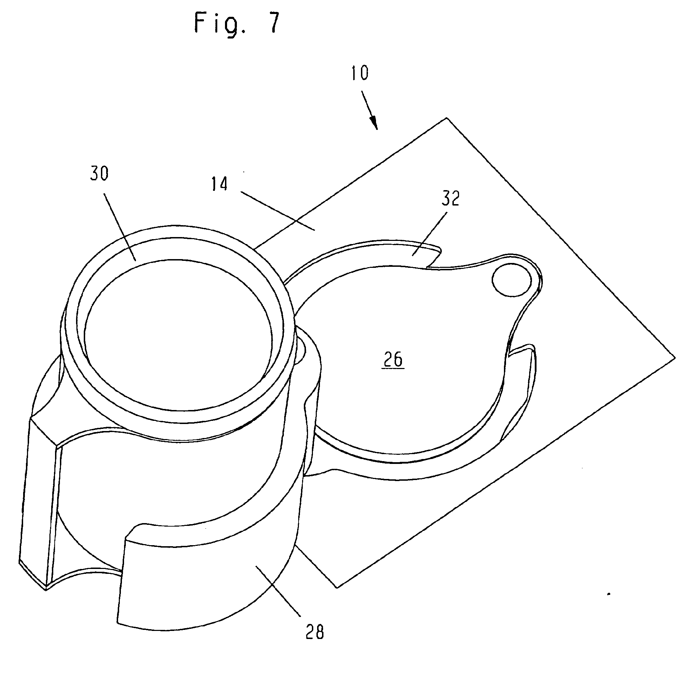

Zur Erläuterung des zweiten, in Figuren 4 - 7 dargestellten Ausführungsbeispiels einer erfindungsgemäßen Halterung 10 werden für mit Figuren 1 - 3 gleiche Bauteile mit Figuren 1 - 3 übereinstimmende Bezugszahlen verwendet. Die in Figuren 4 - 7 dargestellte Halterung 10 weist eine klauenförmige, kreisrunde Aufnahme 28 zum Einstellen eines Getränkebehälters, beispielsweise einer Tasse 30 auf. In einer Grundstellung (Figuren 4 und 5) ist die Aufnahme 28 versenkt in einer näherungsweise zylindrischen Vertiefung 32 des Armaturenbretts oder der Mittelkonsole 14 angeordnet. Die Aufnahme 28 umgreift ein ebenfalls zylinderförmiges Behältnis, im dargestellten Ausführungsbeispiel einen Aschenbecher 24, der versenkt in der Ausnehmung 32 in der Mittelkonsole 14 angeordnet ist. Im Unterschied zu Figuren 1 - 3 ist bei der in Figuren 4 - 7 dargestellten, erfindungsgemäßen Halterung 10 der Aschenbecher 24 feststehend in der Ausnehmung 32 in der Mittelkonsole 14 angeordnet und die Aufnahme 28 ist mit einer Teleskopführung nach oben aus der Ausnehmung 32 heraus anhebbar. Die Teleskopführung wird in Figuren 4 - 7 von der Aufnahme 28 verdeckt und ist deswegen nicht sichtbar. Die Teleskopführung umfasst eine Schwenklagerung, mit der die Aufnahme 28 zur Seite in die in Figuren 6 und 7 dargestellte Stellung schwenkbar ist, in der der Aschenbecher 24 zugänglich ist. Der Aschenbecher 24 weist einen um eine vertikale Achse schwenkbaren Deckel 26 auf, der in Figuren 4, 6 und 7 den Aschenbecher 24 verschließt.

Die Aufnahme 28 weist eine Ausgleichsklappe 20 auf, die näherungsweise in Umfangsrichtung der Aufnahme 28 verläuft und federbeaufschlagt in die Aufnahme 28 hinein verschwenkt. Zum Abstellen des Getränkebehälters 30 weist die Aufnahme 28 zwei Bodenklappen 34 auf, die mit horizontalen Schwenkwellen 36 schwenkbar in der Aufnahme 28 gelagert sind. Beim Absenken der Aufnahme 28 in die Ausnehmung 32 der Mittelkonsole 14 werden die Bodenklappen 34 vom Aschenbecher 24 nach oben in Ausnehmungen 38 an der Innenseite der Aufnahme 28 hinein verschwenkt. Beim Anheben der Aufnahme 28 aus der Ausnehmung 32 der Mittelkonsole 14 heraus schwenken die Bodenklappen 34 durch Schwerkraft oder torsionsfederbetätigt in die in Figur 6 dargestellte horizontale Stützstellung.

## Patentansprüche

1. Halterung für einen Getränkebehälter, mit einem Aufnahmeraum (16) zum Einstellen des Getränkebehälters, wobei in dem Aufnahmeraum (16) ein Behältnis (24) aufgenommen ist, das eine Führung (22) aufweist, an der es aus dem Aufnahmeraum (16) heraus bewegbar ist, und wobei die Führung (22) als Teleskopführung ausgebildet ist und eine Schwenklagerung aufweist, mit der das Behältnis (24) zur Seite schwenkbar geführt ist, **dadurch gekennzeichnet, dass** das Behältnis (24) in einer in den Aufnahmeraum (16) versenkten Stellung nutzbar ist.

2. Halterung nach Anspruch 1, **dadurch gekennzeichnet, dass** das Behältnis (24) in einer aus dem Aufnahmeraum (16) heraus bewegten Stellung nutzbar ist.

3. Halterung nach Anspruch 1, **dadurch gekennzeichnet, dass** das Behältnis (24) ein Aschenbecher ist.

4. Halterung nach Anspruch 1, **dadurch gekennzeichnet, dass** die Halterung (10) einen Deckel (26) aufweist.

5. Mittelkonsole eines Kraftwagens mit einer Halterung (10) für einen Getränkebehälter nach Anspruch 1.

6. Mittelkonsole nach Anspruch 5, **dadurch gekennzeichnet, dass** der Aufnahmeraum (16) als im Wesentlichen zylinderförmige Vertiefung der Mittelkonsole (14) ausgebildet ist.

## Claims

1. A holding device for a drinks container, having a receiving space (16) for insertion of the drinks container, wherein in the receiving space (16) there is housed a receptacle (24) that has a guide (22) on which it is movable out of the receiving space (16), and wherein the guide (22) is in the form of a telescopic guide and has a pivotal bearing with which the receptacle (24) is pivotally guided to the side, **characterised in that** the receptacle (24) is useable in a position recessed in the receiving space (16).

2. A holding device according to claim 1, **characterised in that** the receptacle (24) is useable in a position moved out of the receiving space (16).

3. A holding device according to claim 1, **characterised in that** the receptacle (24) is an ashtray.

4. A holding device according to claim 1, **characterised in that** the holding device (10) has a lid (26).

5. A centre console of a motor vehicle having a holding device (10) for a drinks container according to claim 1.

6. A centre console according to claim 5, **characterised in that** the receiving space (16) is in the form of a substantially cylindrical recess in the centre console (14).

## Revendications

1. Support pour un récipient à boissons, présentant un logement (16) permettant de déposer ledit récipient à boissons, ledit logement (16) recevant un réceptacle (24) muni d'un guide (22) par lequel il peut être extrait dudit logement (16), et ledit guide (22) étant réalisé sous la forme d'un guide télescopique, et comportant une monture pivotante par laquelle le réceptacle (24) peut être animé de pivotements de côté, **caractérisé par le fait que** le réceptacle (24) peut être utilisé dans une position encaissée dans le logement (16).

2. Support selon la revendication 1, **caractérisé par le fait que** le réceptacle (24) peut être utilisé dans une position extraite du logement (16).

3. Support selon la revendication 1, **caractérisé par le fait que** le réceptacle (24) est un cendrier.

4. Support selon la revendication 1, **caractérisé par le fait que** ledit support (10) est pourvu d'un capot (26).

5. Console centrale d'un véhicule automobile, munie d'un support (10) conforme à la revendication 1 et destiné à un récipient à boissons.

6. Console centrale selon la revendication 5, **caractérisée par le fait que** le logement (16) est réalisé sous la forme d'un renfoncement sensiblement cylindrique de ladite console centrale (14).
